# FASCICULE DE BREVET EUROPEEN

(11) **EP 0 793 913 B1**
(45) Date de publication et mention de la délivrance du brevet: **18.12.2002**
(21) Numéro de dépôt: 97420034.7
(22) Date de dépôt: 05.03.1997
(51) Int. Cl.: A01M 1/20, A01M 1/02

(54) **Pièges à animaux rampants**
Falle für kreichenden Tieren
Traps for crawling animals

(30) Priorité: 06.03.1996 FR 9603107
(43) Date de publication de la demande: 10.09.1997
(73) Titulaire: RHONE-POULENC JARDIN, 69009 Lyon (FR)
(72) Inventeur: Lalanne, Jacques, 69000 Saint Romain au Mont d'Or (FR)
(74) Mandataire: Mérigeault, Shona

(56) Documents cités:
- EP-A- 0 161 217
- EP-A- 0 475 902
- WO-A-92/06595
- GB-A- 2 071 980

## Description

La présente invention concerne un nouveau piège à animaux rampants, spécialement les insectes rampants, et plus spécialement les fourmis.

Parmi les animaux rampants, certains sont particulièrement attirés par les appâts liquides. C'est notamment le cas des fourmis.

La demande de brevet internationale WO 92/06595 décrit un piège à insectes équipé d'une base recevant un réservoir à appât liquide, ladite base comportant un support du réservoir et définissant un puits central dans lequel est déversé l'appât liquide. Autour du puits central s'élèvent des parois supportant ledit réservoir et définissant des ouvertures d'accès audit puits central. Ce piège présente ainsi deux éléments distincts constitués par un réservoir d'appât liquide et une base, le premier étant simplement emboîté dans le deuxième, ce qui ne permet pas d'assurer une bonne sécurité contre l'accès au dit appât par des animaux à sang chaud ou des humains. De surcroît, ce dispositif requiert une mise en oeuvre en au moins deux étapes, une première étape activant des moyens pour déverser le liquide et une autre étape de disposition du réservoir sur la base.

Il s'est donc posé à l'homme du métier un problème consistant à s'affranchir des inconvénients évoqués précédemment.

Un premier objet de l'invention est de fournir un piège à animaux rampants mettant en oeuvre un appât liquide.

Un autre objet de l'invention est de fournir un piège à fourmis mettant en oeuvre un appât liquide.

Un autre objet de l'invention est de fournir un piège à animaux rampants présentant toute sécurité contre l'accès au dit appât par les animaux à sang chaud ou les humains ou les enfants.

Un autre objet de l'invention est de fournir un piège à animaux rampants et à appât liquide qui soit simple et peu coûteux à fabriquer.

Un autre objet de l'invention est de fournir un piège à animaux rampants et à appât liquide dont la matière active insecticide est dans une récipient étanche permettant un stockage prolongé sans danger.

Un autre objet de l'invention est de fournir un piège à animaux rampants et à appât liquide dont la matière active insecticide est mise à la disposition des animaux rampants à exterminer seulement au moment de l'usage.

Il a été trouvé que ces buts peuvent être atteints grâce aux pièges selon l'invention.

Le piège selon l'invention comprend :
une plaque constituant un fond lorsque le piège est en position d'utilisation,
un récipient clos contenant l'appât liquide, ce récipient pouvant être crevé par une pression provenant de l'extérieur du piège, de préférence dans un sens perpendiculaire à la surface générale de la plaque-fond,
un couvercle,
éventuellement des parois latérales, ces parois latérales pouvant éventuellement faire partie intégrante du couvercle ou de la plaque-fond,
une pluralité de perforations permettant aux animaux rampants d'accéder vers l'intérieur de l'enceinte,
caractérisé en ce que le couvercle adhère à la plaque fond et constitue avec elle une enceinte unique contenant le récipient clos en son sein.

L'invention concerne encore des pièges tels que définis ci-avant, dans lesquels la plaque-fond comprenant une pluralité de striures (ou nervures) disposées de manière à ce qu'un liquide répandu sur ces nervures puisse circuler entre les nervures, la nervure extérieure formant une barrière continue déterminant un espace fermé.

L'invention concerne encore des pièges tels que définis ci-avant, dans lesquels la plaque-fond et/ou le couvercle peuvent être déformés par simple pression manuelle selon une incurvation en direction de l'intérieur de l'enceinte, cette déformation étant suffisante pour produire la crevaison du récipient clos contenant l'appât liquide.

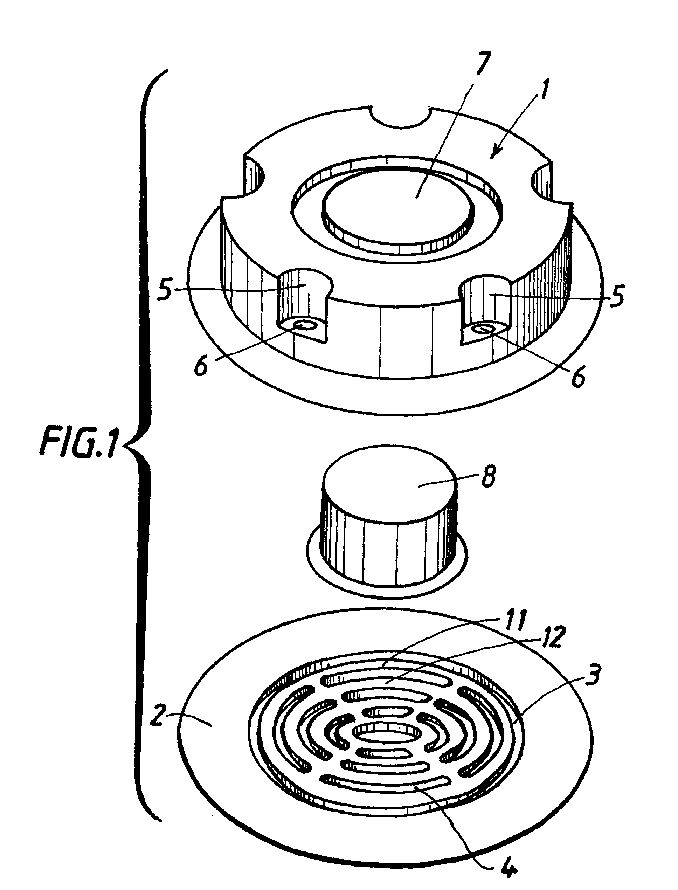

La figure 1 montre, de façon éclatée, le couvercle (1) ainsi que le récipient clos (8) et la plaque-fond (2).

La figure 2 montre, en coupe, le dispositif de l'invention en position d'utilisation avant épanchement de l'appât liquide.

La figure 3 montre, en coupe, le dispositif de l'invention en position d'utilisation pendant qu'on procède à l'écrasement opérant l'épanchement de l'appât liquide. On a donc un piège dans lequel l'épanchement de l'appât liquide peut avoir lieu à l'intérieur du piège par crevaison du récipient clos.

La figure 4 montre, en coupe, le dispositif de l'invention en position d'utilisation après épanchement de l'appât liquide.

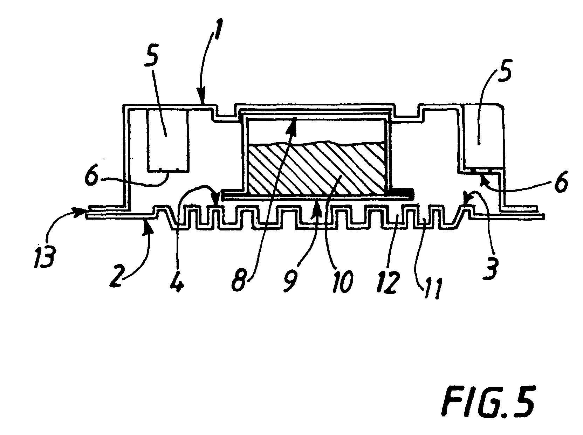

La figure 5 est semblable à la figure 2 mais avec une disposition légèrement différente des nervures (3) et (4) et des rigoles (11) et (12). Dans la figure 5, toutes les nervures sont au même niveau. Dans la figure 2, la nervure périphérique est plus haute que les autres nervures.

Dans ces diverses figures on voit le couvercle (1) ainsi que le récipient clos (8) et la plaque-fond (2). Le récipient clos (8) contient le liquide (10) et une feuille thermoscellée (9) fermant ce récipient clos. Cette feuille (9) peut être par exemple en aluminium fin. Ce récipient clos s'encastre dans un évidement (7) du couvercle (1) et s'appuie sur la plaque-fond (2) de manière à être immobilisé quand le dispositif selon l'invention est en position de stockage ou de transport, avant épanchement du liquide.

Des trous ou ouvertures (6) permettent l'entrée des insectes à l'intérieur du dispositif selon l'invention et l'accès des insectes vers l'appât liquide. Ces trous ou ouvertures peuvent être situés dans le couvercle ou dans les parois latérales des pièges selon l'invention.

Ces trous (6) ont été mis, bien que cela ne soit pas obligatoire, dans des échancrures (5) de manière à être franchement au-dessus de la plaque-fond. Cette situation de surélévation des trous (6) permet que, après épanchement, l'appât liquide ne se répande pas hors du dispositif selon l'invention.

La plaque-fond (2) comprend une nervure circulaire (3) susceptible de contenir le liquide après épanchement dans une zone limitée. Cette zone limitée est précisément délimitée par la nervure (3). Par contre, les autres nervures (4) sont discontinues pour permettre l'écoulement de l'appât liquide, après épanchement, de part et d'autre des dites nervures(4). Entre les nervures (4) on trouve des espaces ou rigoles (11) et (12) dans lesquelles l'appât liquide se répand après épanchement. La taille des nervures (3) et (4) et des rigoles (11) et (12) est telle qu'un insecte, notamment une fourmi, ne s'y noie pas quand les rigoles sont pleines de liquide (10).

Le couvercle (1) est fixé à la plaque-fond (2) par tout moyen connu en soi, notamment par collage ou scellement ou thermoscellement ou thermocollage ou thermosoudage ou soudure. De préférence, c'est un moyen de fixation hermétique aux liquides.

Les divers matériaux constitutifs du couvercle (1), du récipient clos (8) et de la plaque-fond (2) sont tels que ceux-ci, individuellement et ensemble, présentent une certaine souplesse. Il s'ensuit que le dispositif selon l'invention peut [cela est représenté à la figure (3) ] être saisi à la main, de préférence entre le pouce et l'index, et être forcé par simple pression (compression) manuelle s'exerçant dessus et dessous. Ce fait de forcer le récipient clos (8) provoque une brisure ou écrasement. Cette brisure ou éclatement se traduit, au minimum, par une ouverture ou rupture ou perforation de l'opercule ou feuille fine (9) et le liquide se répand sur la plaque-fond (2), à l'intérieur de la zone délimitée par la nervure (3). Le liquide épandu (10) est situé entre les nervures (4) et dans les rigoles (11) et (12).

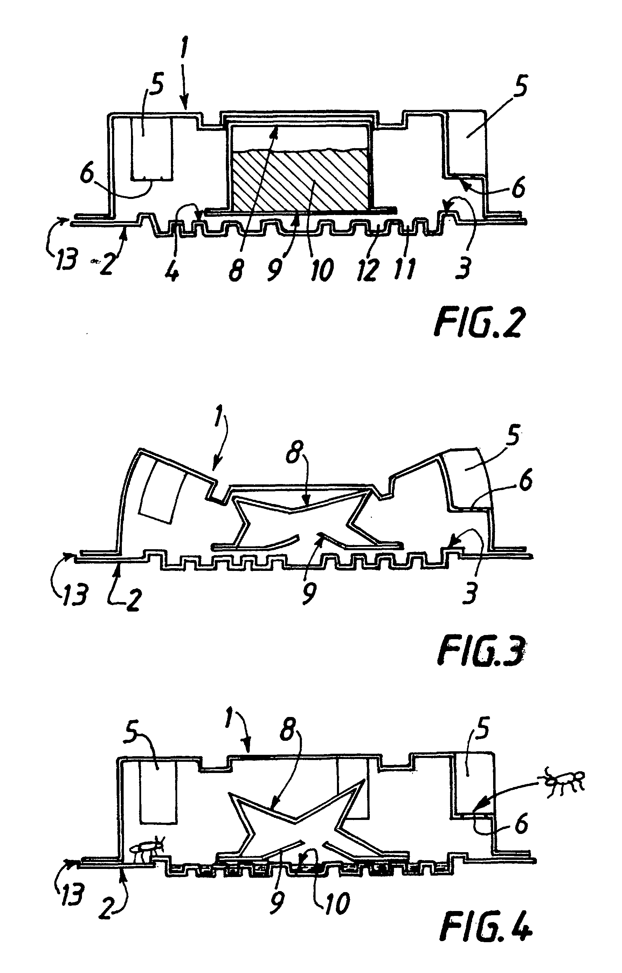

La souplesse des matériaux permet que, après relâchement de cet écrasement, le couvercle (1) et la plaque-fond (2) reviennent (figure 4) sensiblement dans leur position ou état initiaux, tandis que le récipient clos (8) reste éclaté ou brisé, en tout cas ouvert.

Le dispositif selon l'invention est particulièrement avantageux en ce que :
il permet d'assurer une sécurité quasi-totale pendant le stockage et le transport du fait que le liquide ne peut pas se répandre hors du dispositif selon l'invention,
il permet d'assurer une sécurité vis-à-vis des enfants et animaux à sang chaud en empêchant l'accès de ceux-ci à l'appât liquide pendant le temps de fonctionnement du dispositif selon l'invention,
il est très simple de fonctionnement,
il est très simple et économique à fabriquer, notamment par thermoformage ou emboutissage.

Pendant le fonctionnement, les insectes rampants, notamment les fourmis, peuvent s'introduire par les trous (6), s'introduire à l'intérieur du dispositif, aller sucer ou lécher le liquide (10) dans les rigoles (11) et (12), et ressortir quand il veut par les trous (6). Le dispositif selon l'invention est particulièrement avantageux pour les appâts liquides mettant en oeuvre un insecticide n'ayant pas un effet de choc ou un effet immédiat, ce qui laisse le temps à l'insecte de ressortir de l'appareil.

On indique ci-après les modalités de réalisation de l'invention qui sont préférentielles, quoi que non indispensables.

Selon une modalité particulière, les nervures (à l'exception de la nervure périphérique) sont disposées de façon circulaire et de manière discontinue.

Le volume total de l'espace compris entre les nervures est supérieur au volume du récipient clos contenant l'appât liquide.

La hauteur des nervures est suffisamment basse pour que les animaux rampants puissent échapper à la noyade. Pratiquement, la hauteur de ces nervures est généralement comprise entre 0.5 mm et 3 mm.

Le récipient clos est maintenu en place par un évidement (7) du couvercle.

Lors du stockage des pièges selon l'invention, l'appât liquide est contenu dans le récipient clos (8) et y reste.

Ce récipient clos (8) repose sur la plaque-fond (2) lorsque celle-ci est posée à plat sur un support. Mais ce récipient clos est immobilisé (cela est seulement préférentiel) par l'évidement (7) du couvercle.

Le récipient clos est disposé d'une manière telle que sa partie fragile soit vers le bas en position normale, c'est-à-dire vers la plaque-fond, en sorte que l'écoulement de l'appât liquide suite à cet éclatement se fasse sur les nervures de la plaque-fond.

Le liquide de l'appât s'écoulant du récipient clos sur les nervures se répand entre chacune d'elles sans s'éloigner de la plaque-fond grâce à la nervure extérieure qui le contient dans les limites désirés de cette plaque-fond. Le liquide, également, ne déborde pas par-dessus les nervures du fait que le volume entre ces nervures est supérieur à celui du récipient clos.

Les diverse parties des pièges selon l'invention, sont de préférence en matériau plastique, de préférence thermoformable. Ils peuvent être opaque ou transparent.

## Revendications

1. Piège à animaux rampants, spécialement pour fournis, comprenant :
une plaque (2) constituant un fond lorsque le piège est en position d'utilisation,
un récipient clos (8) contenant un appât liquide (10), ce récipient pouvant être crevé par une pression provenant de l'extérieur du piège, de préférence dans un sens perpendiculaire à la surface générale de la plaque-fond,
un couvercle (1),
éventuellement des parois latérales, ces parois latérales pouvant éventuellement faire partie intégrante du couvercle ou de la plaque-fond (2),
une pluralité de perforations (6) permettant aux animaux rampants d'accéder vers l'intérieur du piège,
**caractérisé en ce que** le couvercle adhère à la plaque fond et constitue avec elle une enceinte unique contenant le récipient clos en son sein.

2. Piège selon la revendication 1 **caractérisé en ce que** la plaque-fond comprenant une pluralité de nervures disposées de manière à ce qu'un liquide répandu sur ces nervures puisse circuler entre les nervures, la nervure extérieure formant une barrière continue déterminant un espace fermé.

3. Piège selon l'une des revendications précédentes, **caractérisé en ce que** la plaque-fond et/ou le couvercle peuvent être déformés par simple pression manuelle selon une incurvation en direction de l'intérieur de l'enceinte, cette déformation étant suffisante pour produire la crevaison du récipient clos contenant l'appât liquide.

4. Piège selon l'une des revendications précédentes, **caractérisé en ce que** l'épanchement de l'appât liquide peut avoir lieu à l'intérieur du piège par crevaison du récipient clos.

5. Piège selon l'une des revendications précédentes, **caractérisé en ce que** le récipient clos est fermé par une feuille thermoscellée et/ou en aluminium.

6. Piège selon l'une des revendications précédentes, **caractérisé en ce que** le récipient clos s'encastre dans un évidement du couvercle.

7. Piège selon l'une des revendications précédentes, **caractérisé en ce que** le récipient clos s'appuie sur la plaque-fond de manière à être immobilisé quand le dispositif selon l'invention est en position de stockage ou de transport, avant épanchement du liquide.

8. Piège selon l'une des revendications précédentes, **caractérisé en ce qu'**il comprend des trous ou ouvertures en son couvercle ou en ses parois latérales permettant l'entrée des insectes à l'intérieur et l'accès des insectes vers l'appât liquide.

9. Piège selon l'une des revendications précédentes, **caractérisé en ce qu'**il comprend des trous ou ouvertures en son couvercle ou en ses parois latérales permettant l'entrée des insectes à l'intérieur et l'accès des insectes vers l'appât liquide, et que ces trous sont surélevés de manière à ce que, après épanchement, l'appât liquide ne se répande pas hors du dispositif selon l'invention.

10. Piège selon l'une des revendications précédentes, **caractérisé en ce que** la plaque-fond comprend une nervure circulaire susceptible de contenir le liquide après épanchement dans une zone limitée.

11. Piège selon l'une des revendications précédentes, **caractérisé en ce que** la plaque-fond comprend des nervures discontinues pour permettre l'écoulement de l'appât liquide de part et d'autre des dites nervures, éventuellement dans des rigoles.

12. Piège selon l'une des revendications précédentes, **caractérisé en ce que** la taille des nervures et des rigoles est telle qu'un insecte, notamment une fourmi, ne s'y noie pas quand les rigoles sont pleines de liquide.

13. Piège selon l'une des revendications précédentes, **caractérisé en ce que** le couvercle est fixé à la plaque-fond par collage ou scellement ou thermoscellement ou thermocollage ou thermosoudage ou soudure.

14. Piège selon l'une des revendications précédentes, **caractérisé en ce que** le couvercle est fixé à la plaque-fond par un moyen de fixation hermétique aux liquides.

15. Piège selon l'une des revendications précédentes, **caractérisé en ce que** les divers matériaux constitutifs du couvercle, du récipient clos et de la plaque-fond sont tels que, individuellement et ensemble, ils présentent une souplesse, telle que le piège peut être saisi à la main et être forcé par simple pression manuelle s'exerçant dessus et dessous de manière à forcer le récipient clos en provoquant une brisure ou écrasement.

16. Piège selon l'une des revendications précédentes, **caractérisé en ce que** la brisure du récipient clos se traduit par une ouverture ou rupture ou perforation de l'opercule ou feuille fine, avec épanchement du liquide sur la plaque-fond.

17. Piège selon l'une des revendications précédentes, **caractérisé en ce que** le volume total de l'espace compris entre les nervures est supérieur au volume du récipient clos contenant l'appât liquide.

18. Piège selon l'une des revendications précédentes, **caractérisé en ce que** la hauteur des nervures est comprise entre 0.5 mm et 3 mm.

## Claims

1. Trap for crawling animals, especially for ants, comprising:
a plate (2) forming a bottom when the trap is in the position of use,
a closed container (8) containing a liquid bait (10), it being possible for this container to be collapsed by pressure coming from outside the trap, preferably in a direction perpendicular to the overall surface of the base plate,
a lid (1),
possibly side walls, these side walls possibly forming an integral part of the lid or of the base plate (2),
a plurality of perforations (6) making it possible for the crawling animals to access the inside of the trap, **characterized in that** the lid adheres to the base plate and forms therewith a single chamber containing the closed container therein.

2. Trap according to Claim 1, **characterized in that** the base plate comprises a plurality of ribs placed so that a liquid spread over these ribs can circulate between the ribs, the outer rib forming a continuous barrier defining a closed space.

3. Trap according to either of the preceding claims, **characterized in that** the base plate and/or the lid can be deformed by simple manual pressure along a curve in the direction of the inside of the chamber, this deformation being enough to produce puncturing of the closed container containing the liquid bait.

4. Trap according to one of the preceding claims, **characterized in that** the overflow of the liquid bait may take place inside the trap by collapsing the closed container.

5. Trap according to one of the preceding claims, **characterized in that** the closed container is closed by a sheet which is heat-sealed and/or made of aluminium.

6. Trap according to one of the preceding claims, **characterized in that** the closed container fits into a recess in the lid.

7. Trap according to one of the preceding claims, **characterized in that** the closed container bears on the base plate so as to be immobilized when the device according to the invention is in the storage or transport position, before overflow of the liquid.

8. Trap according to one of the preceding claims, **characterized in that** it comprises holes or openings in its lid or in its side walls allowing the insects to enter inside and to access the liquid bait.

9. Trap according to one of the preceding claims, **characterized in that** it comprises holes or openings in its lid or in its side walls allowing the insects to enter inside and access the liquid bait, and **in that** these holes are raised so that, after overflowing, the liquid bait does not spill outside the device according to the invention.

10. Trap according to one of the preceding claims, **characterized in that** the base plate comprises a circular rib capable of containing the liquid after it overflows in a limited region.

11. Trap according to one of the preceding claims, **characterized in that** the base plate comprises discontinuous ribs to allow overflow of the liquid bait on either side of the said ribs, possibly in channels.

12. Trap according to one of the preceding claims, **characterized in that** the size of the ribs and of the channels is such that an insect, especially an ant, does not drown when the channels are full of liquid.

13. Trap according to one of the preceding claims, **characterized in that** the lid is fastened to the base plate by adhesive bonding or sealing or heat-sealing or hot-melt adhesion or hot-melt soldering or soldering.

14. Trap according to one of the preceding claims, **characterized in that** the lid is fastened to the base plate by a fastening means sealed against liquids.

15. Trap according to one of the preceding claims, **characterized in that** the various materials constituting the lid, the closed container and the base plate are such that, individually and together, they have a flexibility such that the trap can be grasped by hand and be forced by simple manual pressure being exerted on the top and bottom so as to force the closed container thereby causing breaking or crushing.

16. Trap according to one of the preceding claims, **characterized in that** breaking of the closed container results in opening or rupture or perforation of the lid or thin sheet, with overflow of the liquid onto the base plate.

17. Trap according to one of the preceding claims, **characterized in that** the total volume of the space contained between the ribs is greater than the volume of the closed container containing the liquid bait.

18. Trap according to one of the preceding claims, **characterized in that** the height of the ribs is between 0.5 mm and 3 mm.

## Patentansprüche

1. Falle für Kriechtiere, insbesondere für Ameisen, mit
- einer Platte 2, die einen Boden bildet, wenn sich die Falle in Benutzungsposition befindet,
- einem geschlossenen Behälter 8, der einen Flüssigköder 10 enthält, der zum Platzen gebracht werden kann, indem von außerhalb der Falle und vorzugsweise in einer zur allgemeinen Fläche der Bodenplatte senkrechten Richtung Druck ausgeübt wird,
- einem Deckel (1),
- eventuell Seitenwänden, die Bestandteil des Deckels oder der Bodenplatte (2) sein können,
- mehreren Perforationen (6), durch die die Kriechtiere ins Innere der Falle gelangen können,
**dadurch gekennzeichnet, dass** der Deckel an der Bodenplatte haftet und mit dieser einen einzigen Raum bildet, der in seinem Inneren den geschlossenen Behälter enthält.

2. Falle nach Anspruch 1, **dadurch gekennzeichnet, dass** die Bodenplatte mehrere Rippen aufweist, die derart angeordnet sind, dass eine über diesen Rippen verteilte Flüssigkeit zwischen den Rippen zirkulieren kann, wobei die äußere Rippe eine durchgehende Barriere bildet, die einen geschlossenen Raum festlegt.

3. Falle nach einem der vorhergehenden Ansprüche, **dadurch gekennzeichnet, dass** die Bodenplatte und/oder der Deckel durch einfachen manuellen Druck entlang einer Biegung in Richtung des Inneren des Raums verformt werden können, wobei diese Verformung ausreicht, um das Platzen des geschlossenen Behälters zu bewirken, der den Flüssigköder enthält.

4. Falle nach einem der vorhergehenden Ansprüche, **dadurch gekennzeichnet, dass** das Ausgießen des Flüssigköders durch Platzen des geschlossenen Behälters innerhalb der Falle erfolgen kann.

5. Falle nach einem der vorhergehenden Ansprüche, **dadurch gekennzeichnet, dass** der geschlossene Behälter von einer Folie verschlossen wird, die heißgesiegelt und/oder aus Aluminium ist.

6. Falle nach einem der vorhergehenden Ansprüche, **dadurch gekennzeichnet, dass** sich der geschlossene Behälter in eine Aussparung des Deckels einfügt.

7. Falle nach einem der vorhergehenden Ansprüche, **dadurch gekennzeichnet, dass** der geschlossene Behälter derart an der Bodenplatte aufliegt, dass er verriegelt ist, wenn sich die erfindungsgemäße Vorrichtung vor dem Ausgießen der Flüssigkeit in Aufbewahrungs- oder Transportposition befindet.

8. Falle nach einem der vorhergehenden Ansprüche, **dadurch gekennzeichnet, dass** sie Löcher oder Öffnungen in ihrem Deckel oder ihren Seitenwänden besitzt, durch die Insekten ins Innere und zum Flüssigköder gelangen können.

9. , Falle nach einem der vorhergehenden Ansprüche, **dadurch gekennzeichnet, dass** sie Löcher oder Öffnungen in ihrem Deckel oder ihren Seitenwänden besitzt, durch die Insekten ins Innere und zum Flüssigköder gelangen können und die so hoch angeordnet sind, dass sich die Flüssigkeit, nachdem sie ausgegossen wurde, nicht außerhalb der erfindungsgemäßen Vorrichtung ausbreitet.

10. Falle nach einem der vorhergehenden Ansprüche, **dadurch gekennzeichnet, dass** die Bodenplatte eine kreisförmige Rippe aufweist, die die Flüssigkeit nach dem Ausgießen in einem begrenzten Bereich halten kann.

11. Falle nach einem der vorhergehenden Ansprüche, **dadurch gekennzeichnet, dass** die Bodenplatte durchbrochene Rippen aufweist, damit sich der Flüssigköder auf beiden Seiten der Rippen, eventuell in Rinnen, ausbreiten kann.

12. Falle nach einem der vorhergehenden Ansprüche, **dadurch gekennzeichnet, dass** die Rippen und Rinnen nur so hoch sind, dass ein Insekt, insbesondere eine Ameise, nicht ertrinkt, wenn die Rinnen voller Flüssigkeit sind.

13. Falle nach einem der vorhergehenden Ansprüche, **dadurch gekennzeichnet, dass** der Deckel durch Kleben, Siegeln, Heißsiegeln, Schmelzkleben, Thermoschweißen oder Schweißen an der Bodenplatte befestigt ist.

14. Falle nach einem der vorhergehenden Ansprüche, **dadurch gekennzeichnet, dass** der Deckel flüssigkeitsundurchlässig an der Bodenplatte befestigt ist.

15. Falle nach einem der vorhergehenden Ansprüche, **dadurch gekennzeichnet, dass** die verschiedenen Materialien, aus denen der Deckel, der geschlossene Behälter und die Bodenplatte gebildet sind, derart beschaffen sind, dass sie einzeln und zusammen so flexibel sind, dass die Falle in die Hand genommen werden kann und der geschlossene Behälter durch einfachen manuellen Druck, der von oben und unten ausgeübt wird, eingedrückt werden kann, sodass er zerbricht oder platzt.

16. Falle nach einem der vorhergehenden Ansprüche, **dadurch gekennzeichnet, dass** das Zerbrechen des geschlossenen Behälters eine Öffnung, einen Riss oder eine Perforation des Verschlusses oder der dünnen Folie bewirkt und damit ein Ausgießen der Flüssigkeit über die Bodenplatte.

17. Falle nach einem der vorhergehenden Ansprüche, **dadurch gekennzeichnet, dass** das Gesamtvolumen der Zwischenräume zwischen den Rippen größer ist als das Volumen des geschlossenen Behälters, der den Flüssigköder enthält.

18. Falle nach einem der vorhergehenden Ansprüche, **dadurch gekennzeichnet, dass**, dass die Rippen zwischen einschließlich 0,5 mm und 3 mm hoch sind.
